# FASCICULE DE BREVET EUROPEEN

(11) **EP 4 065 484 B1**
(45) Date de publication et mention de la délivrance du brevet: **11.06.2025**
(21) Numéro de dépôt: 20807429.4
(22) Date de dépôt: 19.11.2020
(51) Int. Cl.: B65D 21/08, B65D 6/18, B65D 81/02

(54) **COLIS COMPRENANT DES MOYENS DE RETENUE D'UN OBJET**
VERPACKUNG MIT MITTELN ZUM HALTEN EINES GEGENSTANDES
PACKAGE COMPRISING MEANS FOR RETAINING AN OBJECT

(30) Priorité: 29.11.2019 FR 1913469
(43) Date de publication de la demande: 05.10.2022
(73) Titulaire: PA.COTTE SA, 1009 Pully (CH)
(72) Inventeur: LIMOUSIN, Damien, 44360 Saint Etienne de Montluc (FR); MOURRAIN, Denis, 44120 Vertou (FR)
(74) Mandataire: reuteler & cie SA
(86) Numéro de dépôt international: PCT/EP2020/082779
(87) Numéro de publication internationale: WO 2021/105004

(56) Documents cités:
- CN-Y- 201 201 772
- JP-U- S57 101 744
- US-A- 1 632 270
- US-A- 4 032 103
- US-A- 5 197 631
- US-A1- 2016 278 515
- US-B1- 7 246 784
- US-B2- 8 186 541

## Description

Le domaine de l'invention est celui de la logistique.

Plus précisément, l'invention concerne un colis, ou un moyen de colisage logistique, c'est-à-dire un contenant, pour l'acheminement d'objets entre deux destinations, au moyen d'un colis.

Pour transporter un objet en sécurité, et de manière sûre, il est connu des colis tels que des boîtes ou des cartons.

D'une manière générale, les colis comprennent une caisse présentant un fond et un rebord périphérique qui définissent ensemble un volume de rangement dans lequel est logé l'objet à transporter.

Les colis comprennent également un couvercle mobile par rapport à la caisse. Ces couvercles peuvent notamment adopter une position fermée dans laquelle le couvercle obture le volume de rangement de la caisse.

Afin de permettre la protection des objets transportés, certains colis comprennent des moyens de retenue pour maintenir l'objet à transporter dans la caisse.

Il est connu des moyens de retenue qui prennent la forme de panneaux de mousse intégrés à la caisse et au couvercle. Les panneaux de mousse peuvent, le cas échéant, être rapportés à la caisse. Autrement dit, les panneaux de mousse peuvent être intégrés à la caisse seulement si leur présence est requise.

Plus précisément, les panneaux de mousse sont solidarisés au fond de la caisse, éventuellement à son rebord périphérique, et au couvercle.

L'objet à transporter est alors inséré dans le volume de rangement de sorte à venir au contact de la mousse et à être bloqué au minimum par la mousse du fond et la mousse du couvercle.

Ce type de moyens de retenue présente, comme inconvénient majeur, son épaisseur, ou, autrement dit, l'encombrement qu'il occupe dans le volume de rangement de la caisse, et la gestion des déchets de ce type de produit à usage unique.

En effet, la mousse prend une majeure partie du volume de rangement de la caisse. Toutefois, la mousse présente des caractéristiques élastiques de sorte à former des moyens de retenue déformables pour épouser efficacement le contour de l'objet à transporter, et ainsi le caler.

Cependant, en fonction de la taille de l'objet, plusieurs colis doivent être prévus.

Par exemple, pour un objet volumineux et pour un objet de petite taille, une même caisse ne pourra pas être utilisée.

Dans le cas de l'objet de petite taille, si une caisse ou un colis convenant à un objet de grande taille est utilisé, la mousse n'est pas déformée convenablement au contact de l'objet de petite taille, et ce dernier peut alors se déplacer dans le volume de rangement de la caisse, au risque de s'abîmer.

Au contraire, si un objet de grande taille est introduit dans le volume de rangement d'une caisse destinée à contenir un objet de petite taille, le colis peut devenir inutilisable pour faute d'espace insuffisant dans le volume de rangement, le couvercle ne pouvant dès lors pas être fermé correctement de sorte à obturer réellement le volume de rangement de la caisse. Il en résulte alors que l'objet n'est pas réellement protégé. Il est, de surcroît, visible de toute personne transportant le colis, cela pouvant conduire à un risque de vol de l'objet.

Les transporteurs ou les professionnels du conditionnement doivent, en conséquence, posséder des colis de différentes tailles en fonction de la taille des objets à transporter.

Par ailleurs, la présence de la mousse rend le colis encombrant lorsqu'il n'est pas utilisé, cela même si le colis est pliable pour l'amener dans une configuration de rangement ou de stockage « à plat ».

En effet, le pliage du colis permet d'optimiser son encombrement lors de son inutilisation. Toutefois, la compression de la mousse lors du pliage du dispositif peut nuire à l'efficacité de la mousse pour protéger l'objet à transporter. Lorsque de la mousse est comprimée, elle perd en élasticité, et peut ne pas s'expandre correctement à la décompression ; cela est d'autant plus vrai que la durée de compression de la mousse est importante.

Pour éviter cette perte d'élasticité, il est donc nécessaire d'éviter une compression trop importante de la mousse, ce qui ne permet qu'une réduction partielle de l'encombrement du colis lorsqu'il n'est pas utilisé.

Le stockage des colis, soit dans leur configuration d'utilisation, soit partiellement repliés, soit dissociés, nécessite donc de disposer d'un local de grande taille. En effet, la mousse est séparée de la caisse, cela pour les différentes tailles de colis. Cela représente alors un coût important de stockage qui est généralement imputé au consommateur final.

Selon une autre technique connue, les moyens de retenue se présentent sous la forme d'une enveloppe plastique à l'intérieur de laquelle l'objet à transporter est glissé, l'enveloppe est ensuite déformée pour que ses parois viennent au contact de l'objet à transporter et maintiennent celui-ci dans sa position.

Selon un premier type, les enveloppes peuvent être solidarisées sur le fond de la caisse et leur déformation peut être réalisée par exemple par chauffage de sorte à rétracter la matière, généralement une matière plastique, pour que celle-ci se rigidifie au contact de l'objet.

Un inconvénient de cette solution réside dans le fait que la déformation de l'enveloppe, lorsqu'elle est réalisée par chauffage, ne peut pas être réalisée par tout le monde puisque cette technique implique le recours à un équipement de chauffage spécifique.

En effet, des moyens de chauffage, tels que des chauffeurs thermiques par exemple, doivent être utilisés et peuvent nécessiter une formation spéciale de sorte que seuls les professionnels puissent déformer l'enveloppe.

Par ailleurs, lorsque l'enveloppe est solidaire du fond de la caisse, cela peut présenter un inconvénient majeur pour l'intégrité de la caisse, notamment si celle-ci est en carton, une chaleur trop élevée pouvant détruire le carton en le brûlant.

De plus, l'introduction de l'objet à transporter dans l'enveloppe peut s'avérer difficile, voire impossible (selon les dimensions respectives de l'objet et de l'enveloppe).

Cela est particulièrement vérifié si l'objet à transporter est inséré dans l'enveloppe une fois que la caisse est en forme, c'est-à-dire que le volume de rangement est défini, le rebord périphérique de la caisse présentant notamment un obstacle majeur à l'insertion de l'objet dans l'enveloppe.

Pour pallier à cela, il peut être nécessaire de, premièrement, insérer l'objet dans l'enveloppe puis ensuite de former la caisse et enfin de déformer l'enveloppe.

Cela représente un temps de manipulation important qui peut être préjudiciable pour les professionnels et également être impossible à réaliser pour des particuliers, notamment pour déformer l'enveloppe ou mettre en forme la caisse.

Selon un deuxième type, l'enveloppe peut également être solidaire d'un plateau destiné à être logé dans la caisse. Dans ce cas, l'objet est introduit à l'intérieur de l'enveloppe puis, afin de solidariser et de maintenir l'objet, l'enveloppe est déformée par pliage des bords du plateau, de sorte à tendre les deux parois de l'enveloppe pour emprisonner l'objet. Une fois que cela est terminé, le plateau replié peut être inséré dans la caisse puis le couvercle peut être refermé sur la caisse.

Ces moyens de retenue présentent également certains inconvénients.

En effet, l'insertion de l'objet dans l'enveloppe ne pose pas de problème, cependant la déformation du plateau, notamment le pliage de ses bords représente une manipulation compliquée, voire impossible à réaliser lorsque l'objet est volumineux et que l'enveloppe à déformer propose une résistance à la déformation importante. La déformation de l'enveloppe peut alors devenir chronophage et rebuter les professionnels qui feront alors une déformation partielle voire proposeront un colis de taille supérieure engendrant une augmentation du coût de transport pour le consommateur final.

En outre, cela oblige le stockage à la fois de la caisse, du couvercle et des moyens de retenue, ce qui représente un encombrement total préjudiciable et donc un surcoût qui est souvent répercuté au client final.

Pour répondre à ces inconvénients, des moyens de traction du plateau vers le couvercle ont été conçus.

Ces moyens de traction comprennent notamment des élastiques solidaires du plateau, sur lesquels l'utilisateur tire pour rapprocher le plateau du couvercle et ainsi bloquer l'objet à transporter entre le plateau et le couvercle.

Lorsque l'objet est bloqué, des moyens d'accrochage sont alors utilisés pour maintenir l'effort de traction initié par l'utilisateur et ainsi libérer ce dernier.

Ces moyens d'accrochage se présentent sous la forme d'un crochet destiné à retenir les élastiques les uns par rapport aux autres.

Si cette solution apporte une bonne retenue de l'objet dans le colis, elle reste toutefois perfectible.

En effet, ces moyens de retenue demandent un effort à l'utilisateur qui doit à la fois réaliser une traction et ensuite maintenir la traction initiée pour utiliser les moyens d'accrochage.

Il arrive donc que l'utilisateur puisse perdre le bénéfice de la traction initiée lors de la manipulation des moyens d'accrochage.
JPS57101744U concerne une mallette de rangement qui permet de retirer facilement des papiers décoratifs tels que du papier, du papier de soie, des serviettes en papier, des couches en papier et similaires avec un seul morceau de ceux-ci.
US4032103A concerne une béquille réglable pour supporter de lourdes charges à différentes hauteurs dans laquelle des moyens élastiques sont prévus pour contrebalancer au moins partiellement le poids de l'élément mobile afin de faciliter le réglage de la hauteur verticale de la béquille.
US2016278515A1 concerne un ensemble de bureau destiné à fournir une surface de travail réglable en hauteur.
US7246784B1 concerne une étagère à ressort qui est sélectivement positionnée à l'intérieur d'une glacière à boissons existante, ayant une plate-forme qui s'élève progressivement verticalement au fur et à mesure que les boissons en sont retirées, évitant ainsi le besoin de un utilisateur à atteindre profondément à l'intérieur des limites de la glacière afin de récupérer une boisson.

US5197631 concerne un mécanisme permettant de pousser automatiquement vers le haut des tissus stockés en couches dans une boîte.

L'invention a notamment pour objectif de palier les inconvénients de l'art antérieur.

Plus précisément, l'invention a pour objectif de proposer une solution de maintien automatique d'un objet à transporter à l'intérieur d'un colis.

L'invention a également pour objectif de fournir une telle solution qui soit simple de mise en oeuvre et ne demande pas de manipulation particulière pour un utilisateur.

L'invention a en outre pour objectif de fournir une telle solution qui soit pérenne dans le temps.

Ces objectifs, ainsi que d'autres qui apparaîtront par la suite, sont atteints grâce à l'invention qui a pour objet un colis de transport logistique réutilisable pour le transport d'un objet comprenant
- une caisse présentant un volume de rangement défini par un fond et un rebord périphérique sensiblement perpendiculairement au fond ;
- un couvercle apte à occuper une position de fermeture de la caisse dans laquelle le volume de rangement est obturé, le couvercle étant mobile entre une position ouverte et une position fermée et vice et versa
- un plateau logé dans le volume de rangement et mobile par rapport au fond entre une position de repos dans laquelle il est situé au voisinage du fond et une position d'utilisation dans laquelle il est écarté du fond et maintient l'objet contre le couvercle ;
- des moyens de rappel du plateau vers sa position d'utilisation,
- les moyens de rappel comprenant:
   - un croisillon mobile entre une position aplatie dans laquelle il est écrasé entre le plateau et le fond, et une position déployée dans laquelle il repousse le plateau par rapport au fond ;
   - un organe de rappel solidaire du croisillon et tendant à positionner le croisillon dans sa position déployée depuis sa position aplatie.

Le croisillon et l'organe de rappel permettent de repousser le plateau vers sa position d'utilisation de manière automatique. L'objet positionné sur le plateau est alors maintenu entre le couvercle et le plateau lorsque le couvercle ferme le volume de rangement.

Ainsi, l'objet peut être acheminé sans risque d'être dégradé durant le transport en pouvant heurter le rebord périphérique de la caisse lorsque cette dernière est manipulée vigoureusement.

Par ailleurs le calage de l'objet dans la caisse ne demande aucun effort l'utilisateur puisque c'est l'organe de rappel qui assure le blocage de l'objet entre le plateau et le couvercle, dès l'instant que le couvercle est dans sa position de fermeture du volume de rangement.

Selon un premier mode de réalisation avantageux, le croisillon comprend un premier bras et un deuxième bras articulés l'un par rapport à l'autre, chaque bras comprenant une première extrémité reliée au plateau et une deuxième extrémité mobile le long du fond, et l'organe de rappel se présente sous la forme d'un élastique reliant la deuxième extrémité du premier bras ou la deuxième extrémité du deuxième bras à la caisse pour rapprocher la deuxième extrémité du premier bras de la deuxième extrémité du deuxième bras.

Par la tension de l'élastique, le plateau est positionné de manière automatique dans sa position d'utilisation.

En réglant la tension de l'élastique il est donc possible de contrôler la force de plaquage de l'objet contre le couvercle par le plateau lorsque le couvercle ferme le volume de rangement.

De préférence, la liaison entre l'élastique et la caisse est située à l'aplomb, ou quasiment, de la première extrémité du bras auquel est lié l'élastique.

Cela favorise la traction de la première extrémité sur le fond pour repousser le plateau vers sa position d'utilisation.

Selon une forme de réalisation préférée, le colis comprend deux élastiques reliés chacun à un bras d'une part et au fond de la caisse d'autre part.

L'utilisation de deux élastique assure un déplacement synchronisé des deux bras pour repousser le plateau vers sa position d'utilisation.

Ainsi, les risques d'arc-boutement du plateau dans le colis sont limités, voire supprimés.

L'objet à transporter est alors correctement maintenu dans le volume de rangement entre le plateau et le couvercle.

Selon un deuxième mode de réalisation avantageux, le croisillon comprend un premier bras et un deuxième bras articulés l'un par rapport à l'autre, chaque bras comprenant une première extrémité reliée au plateau et une deuxième extrémité mobile le long du fond, et en ce que l'organe de rappel se présente sous la forme d'un élastique reliant la deuxième extrémité du premier bras à la deuxième extrémité du deuxième bras pour les rapprocher l'une de l'autre.

Cela permet notamment de pouvoir extraire le plateau et les moyens de rappel hors du colis lorsque ceux-ci n'ont pas vocation à être utilisés ou pour le rangement du colis.

Par ailleurs, l'accès aux moyens de rappel est facilité notamment pour leur maintenance.

Selon un troisième mode de réalisation avantageux, le croisillon comprend un premier bras et un deuxième bras articulés l'un par rapport à l'autre, et en ce que l'organe de rappel est un ressort de torsion solidaire du premier bras et du deuxième bras, le ressort de torsion tendant à écarter le premier bras par rapport au deuxième bras.

Cela permet notamment de pouvoir extraire le plateau et les moyens de rappel hors du colis lorsque ceux-ci n'ont pas vocation à être utilisés ou pour le rangement du colis.

Par ailleurs, l'accès aux moyens de rappel est facilité notamment pour leur maintenance.

En outre, un ressort de torsion peut facilement être taré en fonction du besoin et peut être incrusté dans le premier bras et le deuxième bras, cela pour le protéger par exemple.

Préférentiellement, le colis comprend deux ressorts de torsion.

L'utilisation de deux ressorts de torsion, judicieusement positionnés, permet de réduire les risques de vrillage des bras lors de leur déplacement.

Avantageusement, caisse comprend des rainures pour guider les bras en translation par rapport au fond.

Le premier bras et le deuxième bras peuvent ainsi être guidés lors de leur déplacement pour repousser le plateau vers sa position d'utilisation.

L'arc-boutement des bras est alors évité au bénéfice du bon blocage de l'objet entre le plateau et le couvercle.

De préférence, la caisse est du type pliable.

Lorsque le colis n'est pas utilisé, la caisse peut alors être repliée pour en faciliter son stockage et limiter l'encombrement du colis lorsqu'il n'est pas utilisé.

D'autres caractéristiques et avantages de l'invention apparaîtront plus clairement à la lecture de la description suivante de modes de réalisation préférentiels de l'invention, donnés à titre d'exemples illustratifs et non limitatifs, et des dessins annexés parmi lesquels :
[Fig. 1] une vue en perspective d'un colis selon l'invention, comprenant une caisse à l'intérieur de laquelle un plateau est maintenu dans une position d'utilisation par des moyens de rappel ;
[Fig. 2] est une vue en perspective d'un colis selon l'invention, dans lequel le plateau est dans une position de repos ;
[Fig. 3] est une vue schématique illustrant le colis dans une configuration dépliée de la caisse ;
[Fig.4] est une vue schématique illustrant le plateau et les moyens de rappel selon un premier et un deuxième mode de réalisation,
[Fig. 5] est une vue schématique illustrant le plateau et les moyens de rappel selon un troisième mode de réalisation.

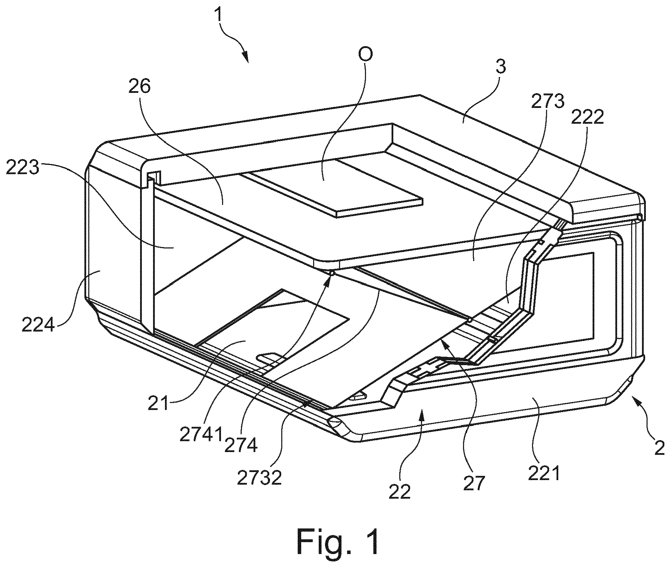

En référence à la figure 1, un colis 1 selon l'invention comprend une caisse 2 définissant un volume de rangement dans lequel est reçu au moins un objet O à transporter, et un couvercle 3. Le couvercle 3 est destiné à fermer le volume de rangement de la caisse 2.

La caisse 2 présente notamment un fond 21 et un rebord périphérique 22 comprenant :
- un premier panneau 221 ;
- un deuxième panneau 222 opposé au premier panneau 221 ;
- un troisième panneau 223 ;
- un quatrième panneau 224 opposé au troisième panneau 223.

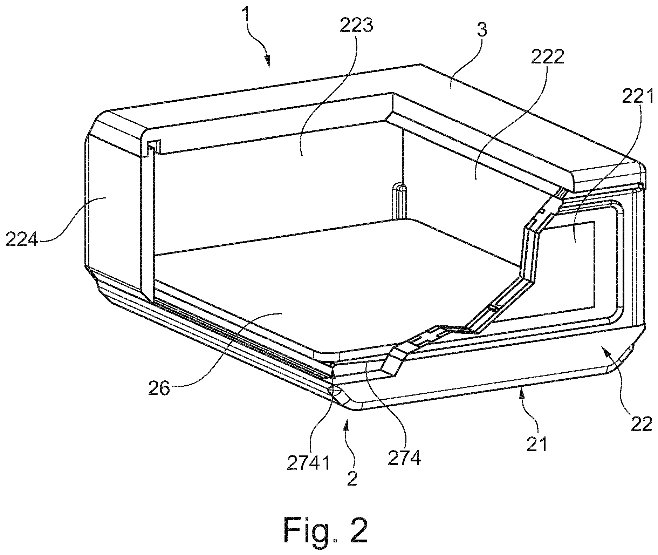

Selon un mode de réalisation préféré illustré sur les figures 1 à 3, le couvercle 3 est solidaire du rebord périphérique 22 de la caisse 2. Plus précisément, le couvercle 3 est monté articulé sur le troisième panneau 223.

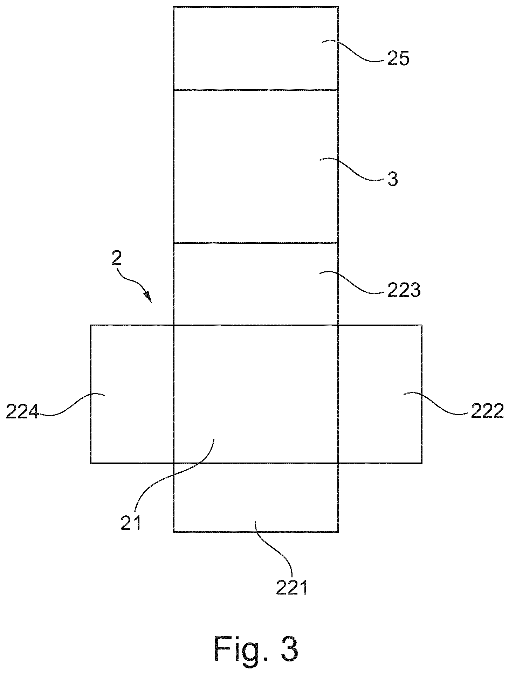

En référence à la figure 3, pour maintenir le couvercle 3 lorsqu'il ferme la caisse 2, le couvercle peut comprendre un jambage 25 qui forme une béquille entre le couvercle 3 et le fond 21.

Selon les présents modes de réalisation, la caisse est du type pliable. Ainsi, chacun du premier panneau 221, du deuxième panneau 222, du troisième panneau 223 et du quatrième panneau 224 est monté mobile par rapport au fond 21, c'est-à-dire qu'il peut adopter :
- une position de rangement dans laquelle il s'étend sensiblement parallèlement au fond 21 ;
- et une position d'utilisation dans laquelle il s'étend sensiblement perpendiculairement au fond 21.

Afin de maintenir les panneaux 221, 222, 223, 224 du rebord périphérique dans leur position d'utilisation, la caisse 2 comprend des moyens de retenue non illustrés sur les figures.

Les moyens de retenue peuvent notamment appartenir aux groupes suivants :
- magnétique ;
- organe rapporté ;
- déformable ;
- avec arc-boutement.

Le colis 1 peut ainsi être positionné dans une configuration de stockage ou dans une configuration d'utilisation.

Dans la configuration de stockage, les panneaux 221, 222, 223, 224 de la caisse 2 sont dans leur position de rangement et le couvercle 3 est coplanaire avec l'un des panneaux 2221, 222, 223, 224 de la caisse 2.

Plus particulièrement, le deuxième panneau 222 et le quatrième panneau 224 sont positionnés en recouvrement du fond 21, et le premier panneau 221 et le troisième panneau 223 sont positionnés dans le prolongement du fond 21.

En d'autres termes, le premier panneau 221 et le troisième panneau 223 sont coplanaires avec le fond 21 et le deuxième panneau 222 et le quatrième panneau 224 sont au-dessus du fond 21.

Le couvercle 3 est alors replié pour venir en recouvrement du troisième panneau 223 et du fond 21. Plus précisément, le couvercle 3 recouvre le fond 21 ainsi que le deuxième panneau 222 et le quatrième panneau 224.

La caisse 2 comprend également un plateau 26 sur lequel est posé l'objet O à transporter, tel qu'illustré sur la figure 1.

Le plateau 26, est mobile en translation par rapport au fond 21 entre deux positions, à savoir :
- une position de repos, dans laquelle le plateau 26 est situé au voisinage du fond 21 de la caisse 2 ;
- une position d'utilisation dans laquelle il est écarté du fond 21 de la caisse 2 et maintient l'objet O contre le couvercle 3 comme expliqué ci-après.

Le plateau 26 présente une surface supérieure destinée à être en regard du couvercle 3 lorsque celui-ci ferme le volume de rangement.

Cette surface supérieure porte avantageusement un revêtement antidérapant et/ou un matériau souple favorisant la retenue d'un objet sur le plateau 26.

Le revêtement antidérapant peut être une couche de matière supplémentaire rapportée sur le plateau 26.

Dans ce cas, la matière supplémentaire peut comprendre des aspérités et/ou un revêtement adhésif tel que de la colle.

Bien entendu, dans le cas où un revêtement adhésif est employé, ce dernier est sélectionné de manière à être compatible avec le caractère réutilisable du colis 1.

En d'autres termes, le revêtement adhésif doit être capable d'améliorer le maintien d'un objet O à transporter dans le colis 1, tout en présentant la capacité de se séparer de l'objet O à transporter quand un utilisateur souhaite l'en extraire du colis 1.

La matière supplémentaire peut notamment être un cuir ou une matière synthétique qui présente des caractéristiques qui lui permettent d'adhérer aux objets O à transporter contenus dans la caisse 2.

Toutefois, pour conserver le caractère réutilisable du colis 1, il est essentiel que la couche de matière supplémentaire ne permette pas de retenir les saletés telles que la poussière, le sable ou d'autres éléments qui empêcheraient l'adhésion de l'objet O à transporter sur l'élément rigide 26, c'est-à-dire le plateau.

Dans le cas d'un matériau souple, une mousse peut être utilisée. Cette mousse doit notamment permettre de se déformer pour épouser au mieux les contours de l'objet O à transporter.

Pour permettre sa mobilité et le maintien de l'objet O contre le couvercle 3, le plateau 26 est déplacé par des moyens de rappel 27.

Les moyens de rappel 27 comprennent notamment un organe de rappel 271.

L'organe de rappel 271 peut alors adopter :
- une configuration contrainte dans laquelle il exerce un premier effort d'écartement du plateau 26 par rapport au fond 21 ;
- une configuration de libération dans laquelle il exerce un deuxième effort d'écartement du plateau 26 par rapport au fond 21.

De préférence, le premier effort d'écartement étant supérieur au deuxième effort d'écartement.

Ainsi, l'organe de rappel a tendance à recouvrer sa configuration libérée, et donc à positionner le plateau 26 dans sa position d'utilisation.

Cette tendance de l'organe de rappel 271 à recouvrer sa configuration libérée permet ainsi de plaquer un objet O à transporter contre le couvercle 3.

Selon le mode de réalisation préférentiel illustré par les figues 1 à 4, les moyens de rappel 27 comprennent également un croisillon 272 intercalé entre le plateau 26 et le fond 21 de la caisse 2.

Le croisillon 272 peut adopter une position aplatie dans laquelle il est écrasé entre le plateau 26 et le fond 21, et une position déployée dans laquelle il repousse le plateau 26 par rapport au fond 21.

Le croisillon 272 comprend un premier bras 273 et un deuxième bras 274 articulés entre eux en forme de croix.

Plus particulièrement, le premier bras 273 et le deuxième bras 274 sont articulés autour d'un axe 275.

Le premier bras 273 présente une première extrémité 2731 par laquelle il est relié au plateau 26, et une deuxième extrémité 2732 libre.

De même, le deuxième bras 274 présente une première extrémité 2741 par laquelle il est relié au plateau 26, et une deuxième extrémité 2742 libre.

Le premier bras 273 et le deuxième bras 274 sont préférentiellement montés à rotation par rapport au plateau 26.

L'organe de rappel 271 est alors couplé au croisillon pour modifier un angle A entre les deux bras 273, 274 du croisillon 272.

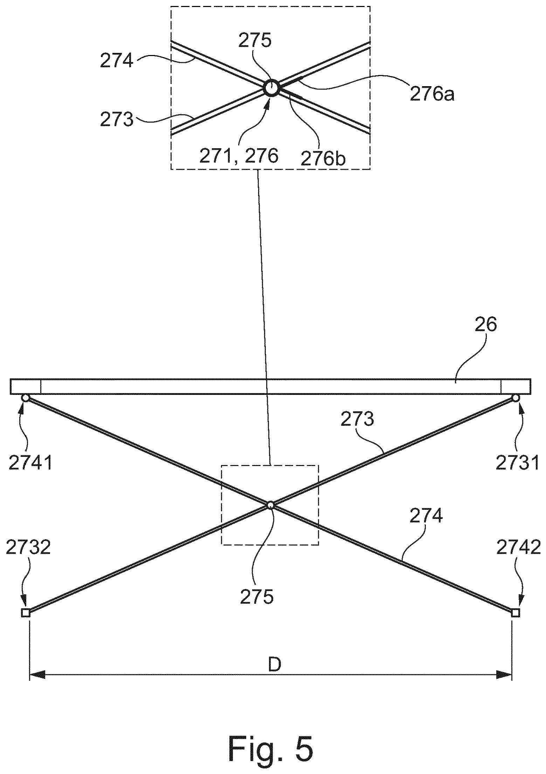

Plus précisément, en référence à la figure 5, un angle A est défini entre le premier bras 273 et le deuxième bras 274, dans le triangle formé entre le premier bras 273, le deuxième bras 274 et le plateau 26.

Le passage de l'organe de rappel 271 de sa position contrainte à sa position libérée provoque alors un rétrécissement de l'angle A, et donc une élévation du plateau 26 par rapport au fond 21.

Au contraire, lorsqu'une force est appliquée sur le plateau 26, alors une l'angle A s'agrandit et le plateau 26 s'abaisse en direction du fond 21.

Pour permettre de faciliter le déplacement du plateau 26 la deuxième extrémité 2732 du premier bras 273 et la deuxième extrémité 2742 du deuxième bras 274 sont montées dans des rainures 28 pratiquées dans la caisse 22.

Plus précisément, les rainures 28 sont pratiquées dans le premier panneau 221 et le troisième panneau 223 du rebord périphérique 22.

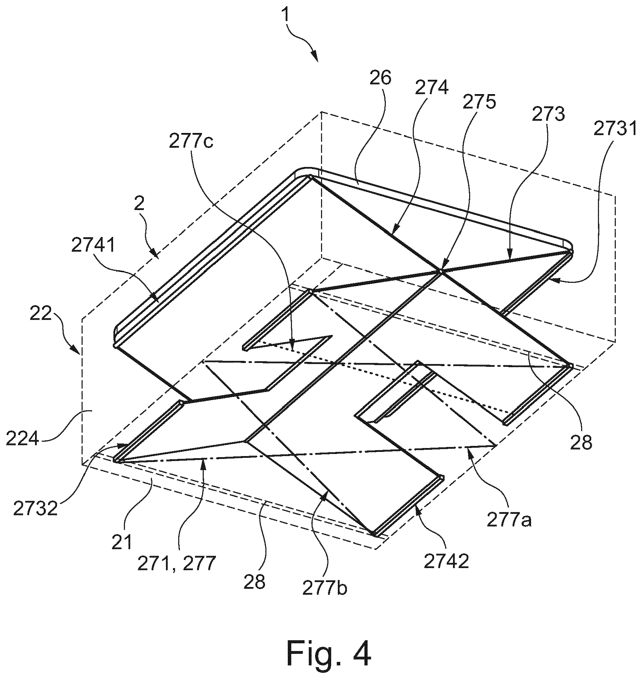

Selon un premier et un deuxième mode de réalisation, illustrés sur la figure 4, l'organe de rappel 271 prend la forme d'un élastique 277.

Selon le premier mode de réalisation, l'élastique 277 est relié, d'une part à la deuxième extrémité 2732 du premier bras 273 ou à la deuxième extrémité 2742 du deuxième bras 274 et, d'autre part, à la caisse 2.

Plus précisément, l'élastique 277 est relié, à chacune de ses extrémités à la deuxième extrémité 2732 du premier bras 273 ou à la deuxième extrémité 2742 du deuxième bras 274.

La liaison entre l'élastique 277 et la caisse 2 est assurée entre les deux extrémités de l'élastique 277.

La liaison de l'élastique 277 sur la caisse 2 peut être réalisée soit sur le rebord périphérique 22, soit sur le fond 21.

Avantageusement, les moyens de rappel 27 comprennent deux élastiques 277, à savoir un premier élastique 277a et un deuxième élastique 277b.

Dans ce cas :
- le premier élastique 277a est alors relié, d'une part à la deuxième extrémité 2732 du premier bras 273 et, d'autre part, à la caisse 2 ;
- le deuxième élastique 277b est alors relié, d'une part à la deuxième extrémité 2742 du deuxième bras 274 et, d'autre part, à la caisse 2.

Selon le deuxième mode de réalisation, l'organe de rappel 27 comprend un élastique 277c reliant le premier bras 273 et le deuxième bras 274 l'un à l'autre.

Plus précisément, l'élastique 277c est relié à la deuxième extrémité 2732 du premier bras 273 et à la deuxième extrémité 2742 du deuxième bras 274.

Selon une forme de réalisation avantageuse, non illustrée sur les figures, le colis 1 peut comprendre plusieurs élastiques 277c joignant la deuxième extrémité 2732 du premier bras 273 et la deuxième extrémité 2742 du deuxième bras 274.

Selon un troisième mode de réalisation illustré sur la figure 5, l'organe de rappel 271 se présente sous la forme d'un ressort de torsion 276.

Le ressort de torsion 276 est solidaire du premier bras 273 et du deuxième bras 274 et tend à écarter le premier bras 273 par rapport au deuxième bras 274, c'est-à-dire à réduite l'angle A.

Plus précisément, le ressort de torsion 276 est monté autour de l'axe 275 et comprend une première branche 276a reliée au premier bras 273, et une deuxième branche 276b reliée au deuxième bras 274.

Préférentiellement, les moyens de rappel comprennent deux ressorts de torsion 276 montés autour de l'axe 275.

Lorsque le croisillon 272 est dans sa position aplatie, chaque ressort de torsion 276 est alors contraint et ses deux branches 276a, 276b sont alors rapprochées l'une de l'autre.

Par son passage à sa configuration de libération, chaque ressort de torsion 276 permet de positionner le croisillon 272 dans sa position déployée par écartement de la première branche 276a par rapport à la deuxième branche 276b.

Une distance D entre la deuxième extrémité 2732 de la première branche 273 et la deuxième extrémité 2742 de la deuxième branche 274 se trouve alors rétrécie lors du passage du croisillon 272 de sa position aplatie à sa position déployée.

Le deuxième et le troisième mode de réalisation permettent de pouvoir extraire complètement le plateau 26 et les moyens de rappel 27 hors du colis 1 lorsque ceux-ci ne sont pas utilisés puisque les moyens de rappel 27 ne joignent pas la caisse 2.

Lorsque le croisillon 272 est dans sa position aplatie, chaque élastique 277 est alors contraint et tendu entre la caisse 2 et le bras 273, 274 auquel il est relié ou entre le premier bras 273 et le deuxième bras 274.

Par son passage à sa configuration de libération, chaque élastique 277 permet de positionner le croisillon 272 dans sa position déployée par traction de la deuxième extrémité 2732, 3742 de chaque bras 273, 274 l'une vers l'autre.

La distance D entre la deuxième extrémité 2732 du premier bras 273 et la deuxième extrémité 2742 du deuxième bras 274 se trouve alors rétrécie lors du passage du croisillon 272 de sa position aplatie à sa position déployée.

Pour permettre le transport d'un objet O en sécurité, un colis 1 selon l'invention peut être utilisé.

Pour cela, la caisse 2 est mise en forme par positionnement des panneaux 221, 222, 223, 224 dans leur position d'utilisation.

En d'autre termes, le rebord périphérique 22 est mis en forme.

L'objet O est alors inséré dans la caisse 2 et positionné sur le plateau 26.

Lorsque l'objet O est correctement positionné, le couvercle 3 peut être positionné sur le rebord périphérique 22 pour fermer le volume de rangement.

L'organe de rappel 271 des moyens de rappel 27 provoque alors la mise en position déployée du croisillon 272.

Cela permet alors de maintenir bloqué l'objet O entre le couvercle 3 et le plateau 26.

Ainsi, si lors de son transport le colis 1 est chahuté, alors l'objet O reste maintenu entre le plateau 26 et le couvercle 3 en toute sécurité.

Le colis 1 ainsi fermé peut alors être acheminé via un réseau de distribution courant.

Avantageusement, le colis 1, notamment sa caisse 2 et son couvercle 3, peut notamment être réalisé dans du polypropylène extrudé, tel que celui commercialisé sous les dénominations commerciales Akylux, Akyplein et Akyboard (marques déposées) du fabricant DS SMITH (marque déposée), ou dans du polypropylène expansé, c'est-à-dire sous forme de mousse, tel que vendu par la société Storopack (marque déposée).

Le colis 1 qui vient d'être décrit permet ainsi de transporter un objet O en toute sécurité, même si le colis est chahuté lors de son acheminement entre deux destinations.

En effet, les moyens de rappel 27 permettent de positionner le plateau 26 dans sa position d'utilisation et ainsi de bloquer en déplacement l'objet O dans le volume de rangement, entre le couvercle 3 et le plateau 26.

Par ailleurs, dans le cas du premier mode de réalisation illustré sur la figure 4, les moyens de rappel 27 et le plateau 26 forment un ensemble amovible qui peut être extrait lorsque l'objet O à transporter est assez volumineux être maintenu en position uniquement entre le couvercle 3 et le fond 21 de la caisse 2.

De plus, le guidage du plateau 26, grâce aux rainures 28 de la caisse 2 permet d'éviter un arc-boutement du plateau 26 lors de son déplacement depuis sa position de repos à sa position d'utilisation.

Cela permet une d'offrir une pérennité d'utilisation du colis 1.

## Revendications

1. Colis (1) de transport logistique réutilisable pour le transport d'un objet (O) comprenant :
- une caisse (2) présentant un volume de rangement défini par un fond (21) et un rebord périphérique (22) sensiblement perpendiculairement au fond (21);
- un couvercle (3) apte à occuper une position de fermeture de la caisse (2) dans laquelle le volume de rangement est obturé, le couvercle étant mobile entre une position ouverte et une position fermée et vice et versa ;
- un plateau (26) logé dans le volume de rangement et mobile par rapport au fond (21) entre une position de repos dans laquelle il est situé au voisinage du fond (21) et une position d'utilisation dans laquelle il est écarté du fond (21) et maintient l'objet (O) contre le couvercle (3) ;
- des moyens de rappel (27) du plateau (26) vers sa position d'utilisation;
dans lequel le colis est de type pliable et
dans lequel les moyens de rappel (27) comprennent :
- un croisillon (272) mobile entre une position aplatie dans laquelle il est écrasé entre le plateau (26) et le fond (21), et une position déployée dans laquelle il repousse le plateau (26) par rapport au fond (21) ;
- un organe de rappel (271) solidaire du croisillon (272) et tendant à positionner le croisillon (272) dans sa position déployée depuis sa position aplatie.

2. Colis (1) selon la revendication 1, **caractérisé en ce que** le croisillon (272) comprend un premier bras (273) et un deuxième bras (274) articulés l'un par rapport à l'autre, chaque bras (273, 274) comprenant une première extrémité (2731, 2741) reliée au plateau (26) et une deuxième extrémité (2732, 2742) mobile le long du fond (21), et **en ce que** l'organe de rappel (271) se présente sous la forme d'un élastique (277) reliant la deuxième extrémité (2732) du premier bras (273) ou la deuxième extrémité (2742) du deuxième bras (274) à la caisse (21) pour rapprocher la deuxième extrémité (2732) du premier bras (273) de la deuxième extrémité (2742) du deuxième bras (274).

3. Colis (1) selon la revendication précédente, **caractérisé en ce que** la liaison entre l'élastique (277) et la caisse (2) est située à l'aplomb, ou quasiment, de la première extrémité (2731, 2741) du bras (273, 274) auquel est lié l'élastique (277).

4. Colis (1) selon la revendication 2 ou la revendication 3, **caractérisé en ce qu'**il comprend deux élastiques (277a, 277b) reliés chacun à un bras (273, 274) d'une part et au fond (21) de la caisse (2) d'autre part.

5. Colis (1) selon la revendication 1, **caractérisé en ce que** le croisillon (272) comprend un premier bras (273) et un deuxième bras (274) articulés l'un par rapport à l'autre, chaque bras (273, 274) comprenant une première extrémité (2731, 2741) reliée au plateau (26) et une deuxième extrémité (2732, 2742) mobile le long du fond (21), et **en ce que** l'organe de rappel (271) se présente sous la forme d'un élastique (277c) reliant la deuxième extrémité (2732) du premier bras (273) à la deuxième extrémité (2742) du deuxième bras (274) pour les rapprocher l'une de l'autre.

6. Colis (1) selon la revendication 1, **caractérisé en ce que** le croisillon (272) comprend un premier bras (273) et un deuxième bras (274) articulés l'un par rapport à l'autre, et **en ce que** l'organe de rappel (271) est un ressort de torsion (276) solidaire du premier bras (273) et du deuxième bras (274), le ressort de torsion (276) tendant à écarter le premier bras (273) par rapport au deuxième bras (274).

7. Colis (1) selon la revendication précédente, **caractérisé en ce qu'**il comprend deux ressorts de torsion (276).

8. Colis (1) selon l'une quelconque des revendications 2 à 7, **caractérisé en ce que** la caisse (21) comprend des rainures (28) pour guider les bras (273, 274) en translation par rapport au fond (21).

## Patentansprüche

1. Wiederverwendbare Logistik-Transportverpackung (1) zum Transport eines Gegenstands (O), umfassend:
- einen Kasten (2), der einen Stauraum aufweist, der durch einen Boden (21) und einen umlaufenden Rand (22) definiert ist, der im Wesentlichen senkrecht zum Boden (21) steht;
- einen Deckel (3), der imstande ist, eine Verschlussposition des Kastens (2) einzunehmen, in der der Stauraum verschlossen ist, wobei der Deckel zwischen einer geöffneten Position und einer verschlossenen Position und umgekehrt beweglich ist;
- eine Platte (26), die im Stauraum angeordnet und relativ zum Boden (21) zwischen einer Ruhestellung, in der sie sich in der Nähe des Bodens (21) befindet, und einer Gebrauchsstellung, in der sie vom Boden (21) beabstandet ist und den Gegenstand (O) gegen den Deckel (3) hält, beweglich ist;
- Rückstellmittel (27) der Platte (26) in ihre Gebrauchsstellung,
wobei die Verpackung faltbar ist und wobei die Rückstellmittel (27) umfassen:
- ein Kreuzstück (272), das zwischen einer flachen Position, in der es zwischen der Platte (26) und dem Boden (21) zusammengedrückt ist, und einer aufgeklappten Position, in der es die Platte (26) relativ zum Boden (21) wegdrückt, beweglich ist;
- ein Rückstellelement (271), das fest mit dem Kreuzstück (272) verbunden ist und dazu tendiert, das Kreuzstück (272) aus seiner flachen Position in seine aufgeklappte Position zu positionieren.

2. Verpackung (1) nach Anspruch 1, **dadurch gekennzeichnet, dass** das Kreuzstück (272) einen ersten Arm (273) und einen zweiten Arm (274) umfasst, die relativ zueinander angelenkt sind, wobei jeder Arm (273, 274) ein erstes Ende (2731, 2741), das mit der Platte (26) verbunden ist, und ein zweites Ende (2732, 2742) umfasst, das entlang des Bodens (21) beweglich ist, und dass das Rückstellelement (271) in Form eines Gummibands (277) vorliegt, das das zweite Ende (2732) des ersten Arms (273) oder das zweite Ende (2742) des zweiten Arms (274) mit dem Kasten (21) verbindet, um das zweite Ende (2732) des ersten Arms (273) an das zweite Ende (2742) des zweiten Arms (274) anzunähern.

3. Verpackung (1) nach vorherigem Anspruch, **dadurch gekennzeichnet, dass** sich die Verbindung zwischen dem Gummiband (277) und dem Kasten (2) senkrecht oder nahezu senkrecht zum ersten Ende (2731, 2741) des Arms (273, 274) befindeet, mit dem das Gummiband (277) verbunden ist.

4. Verpackung (1) nach Anspruch 2 oder Anspruch 3, **dadurch gekennzeichnet, dass** sie zwei Gummibänder (277a, 277b) umfasst, die jeweils mit einem Arm (273, 274) einerseits und mit dem Boden (21) des Kastens (2) andererseits verbunden sind.

5. Verpackung (1) nach Anspruch 1, **dadurch gekennzeichnet, dass** das Kreuzstück (272) einen ersten Arm (273) und einen zweiten Arm (274) umfasst, die relativ zueinander angelenkt sind, wobei jeder Arm (273, 274) ein erstes Ende (2731, 2741), das mit der Platte (26) verbunden ist, und ein zweites Ende (2732, 2742) umfasst, das entlang des Bodens (21) beweglich ist, und dass das Rückstellelement (271) in Form eines Gummibands (277c) vorliegt, das das zweite Ende (2732) des ersten Arms (273) mit den zweiten Ende (2742) des zweiten Arms (274) verbindet, um diese einander anzunähern.

6. Verpackung (1) nach Anspruch 1, **dadurch gekennzeichnet, dass** das Kreuzstück (272) einen ersten Arm (273) und einen zweiten Arm (274) umfasst, die relativ zueinander angelenkt sind, und dass das Rückstellelement (271) eine Torsionsfeder (276) ist, die fest mit dem ersten Arm (273) und mit dem zweiten Arm (274) verbunden ist, wobei die Torsionsfeder (276) dazu tendiert, den ersten Arm (273) relativ zum zweiten Arm (274) zu beabstanden.

7. Verpackung (1) nach vorherigem Anspruch, **dadurch gekennzeichnet, dass** sie zwei Torsionsfedern (276) umfasst.

8. Verpackung (1) nach einem der Ansprüche 2 bis 7, **dadurch gekennzeichnet, dass** der Kasten (21) Nuten (28) umfasst, um die Arme (273, 274) translatorisch relativ zum Boden (21) zu führen.

## Claims

1. A reusable logistical transport package (1) for transporting an object (O) comprising:
- a box (2) having a stowage volume defined by a bottom (21) and a peripheral rim (22) substantially perpendicular to the bottom (21);
- a lid (3) able to occupy a position closing the box (2) in which the stowage volume is sealed, the lid being movable between an open position and a closed position and vice versa;
- a tray (26) housed in the stowage volume and movable with respect to the bottom (21) between a rest position in which it is located in proximity to the bottom (21) and an operating position in which it is separated from the bottom (21) and holds the object (O) against the lid (3);
- means for returning (27) the tray (26) to its operating position, in which the package is of the foldable type and in which the return means (27) comprise:
- a cross-brace (272) movable between a flattened position in which it is crushed between the tray (26) and the bottom (21), and a deployed position in which it pushes back the tray (26) with respect to the bottom (21);
- a return member (271) secured to the cross-brace (272) and tending to position the cross-brace (272) in its deployed position from its flattened position.

2. The package (1) according to claim 1, **characterized in that** the cross-brace (272) comprises a first arm (273) and a second arm (274) articulated with respect to one another, each arm (273, 274) comprising a first end (2731, 2741) connected to the tray (26) and a second end (2732, 2742) movable along the bottom (21), and **in that** the return member (271) appears in the form of an elastic (277) connecting the second end (2732) of the first arm (273) or the second end (2742) of the second arm (274) to the box (21) to move the second end (2732) of the first arm (273) closer to the second end (2742) of the second arm (274).

3. The package (1) according to the preceding claim, **characterized in that** the connection between the elastic (277) and the box (2) is located vertically, or practically so, above the first end (2731, 2741) of the arm (273, 274) to which the elastic (277) is connected.

4. The package (1) according to claim 2 or 3, **characterized in that** it comprises two elastics (277a, 277b) each connected to an arm (273, 274) on the one hand and to the bottom (21) of the box (2) on the other hand.

5. The package (1) according to claim 1, **characterized in that** the cross-brace (272) comprises a first arm (273) and a second arm (274) articulated with respect to one another, each arm (273, 274) comprising a first end (2731, 2741) connected to the tray (26) and a second end (2732, 2742) movable along the bottom (21), and **in that** the return member (271) appears in the form of an elastic (277c) connecting the second end (2732) of the first arm (273) to the second end (2742) of the second arm (274) to move them closer to one another.

6. The package (1) according to claim 1, **characterized in that** the cross-brace (272) comprises a first arm (273) and a second arm (274) articulated with respect to one another, and **in that** the return member (271) is a torsion spring (276) secured to the first arm (273) and to the second arm (274), the torsion spring (276) tending to separate the first arm (273) with respect to the second arm (274).

7. The package (1) according to the preceding claim, **characterized in that** it comprises two torsion springs (276).

8. The package (1) according to any one of claims 2 to 7, **characterized in that** the box (21) comprises grooves (28) for guiding the arms (273, 274) in translation with respect to the bottom (21).
